# DEMANDE DE BREVET EUROPEEN

(11) **EP 2 305 038 A1**
(43) Date de publication de la demande: **06.04.2011**
(21) Numéro de dépôt: 10306006.7
(22) Date de dépôt: 21.09.2010
(51) Int. Cl.: A21B 1/48

(54) **Dispositif de fabrication de pain de mie en continu, sans croûte**

(30) Priorité: 29.09.2009 FR 0956757
(71) Demandeur: Techdiss Technologies S.L., 17740 Vilafant Gerona (ES)
(72) Inventeur: Tastavin, Serge, 17742, Avinyonet de Puigventós (ES)
(74) Mandataire: Fantin, Laurent

(57) **Abrégé**

L'objet de l'invention est un dispositif de fabrication de pain de mie sans croûte, en continu, **caractérisé en ce qu**'il comprend un module (18) de transfert et un module (20) de cuisson, ledit module (18) de transfert comprenant une bande (26) continue, en boucle fermée entre deux poulies (24), cette bande étant déformable.

## Description

La présente invention concerne un dispositif de fabrication de pain de mie sans croûte, en continu, à intégrer dans une chaîne de production entre un poste d'alimentation en pâte et un poste de tranchage/conditionnement.

Le pain de mie est un produit agroalimentaire produit industriellement, pour un marché en croissance.

Le pain de mie est destiné à être coupé en tranches pour la plus grande part.

De plus, le marché requiert des tranches de pain de mie, sans croûte, de façon à être intégralement utilisées et consommées. L'absence de croûte permet de présenter des tranches avec des bords blancs sur toute la périphérie et une homogénéité de structure et de goût, y compris sur les bords.

En effet, la croûte engendre un goût différent susceptible de perturber le goût des produits qui sont prévus pour être disposés sur lesdites tranches de pain de mie.

C'est ainsi que la demande en pain de mie sans croûte représente sensiblement 60% des ventes.

Actuellement, le pain de mie est fabriqué à partir de moules avec cuisson au four traditionnel, ce qui est long et génère une croûte qui doit être retirée par découpe conduisant à des pertes de matière substantielles 50% en poids de matière, en plus de l'étape de fabrication supplémentaire nécessaire et donc des coûts correspondants. Le surcoût de production est d'environ 50%.

De plus, la cuisson en tunnel à air chaud le plus souvent est longue et il faut assurer le démoulage ce qui n'est pas chose aisée, requérant souvent des moules spécifiques ou l'émission d'air comprimé en complément.

Une avancée certaine dans le procédé de fabrication de pain de mie sans croûte se trouve décrite dans les brevets espagnols N°P 200803055 et N°P 200803056.

En effet, tout d'abord, la cuisson par des micro-ondes a permis une cuisson très rapide et à coeur.

De plus, la cuisson en continu entre 4 bandes mobiles, perpendiculaires les unes aux autres de préférence, pour former un tunnel à section sensiblement carrée permet de produire un pain de mie continu qu'il est possible de débiter, après refroidissement, directement en sortie de cuisson.

On note que dans ce cas, le pain de mie produit est exempt de croûte.

Le rendement est donc fortement amélioré, les pertes de matière liées au décroûtage sont supprimées, la cadence de production est fortement améliorée. Le problème posé par les bandes indépendantes est celui de ne pas constituer un moule fermé sur au moins trois faces.

En effet, même si les bandes sont à déplacement parfaitement synchronisé, dans les angles constitués par deux bandes perpendiculaires, il subsiste une zone ouverte, surtout dans le cas de tapis lisses.

De ce fait, de la pâte peut se glisser dans cet espace au fur et à mesure de la fabrication nécessitant un entretien régulier rapproché.

Or l'interruption régulière d'une telle chaîne de fabrication n'est pas souhaitable car, en plus du temps de production perdu, il faut gérer le volume de pâte en attente en amont, ce qui n'est pas aisé du fait qu'il s'agit d'une pâte fermentée.

La présente invention a pour objet un dispositif qui pallie les inconvénients des agencements de l'art antérieur et qui conserve la possibilité de travailler en continu avec une cuisson par micro-ondes.

Le dispositif objet de l'invention est maintenant décrit en détail selon un mode de réalisation préférentiel mais non limitatif, cette description s'appuyant sur les dessins annexés, dessins sur lesquels les différentes figures représentent :
- figure 1 : une vue schématique d'une installation intégrant le dispositif objet de la présente invention,
- figure 2 : une vue en perspective schématique du dispositif dans son entier,
- figures 3A et 3B : une vue de détail en perspective de l'agencement d'une portion de la bande transporteuse mobile dans les deux configurations,
lors d'un déplacement en en ligne droite et d'un déplacement en courbe. Sur la figure 1, on a représenté une installation de fabrication de pain de mie en continu.

Cette installation comprend un poste 10 de fabrication et d'alimentation en pâte à pain de mie, un poste 12 de cuisson de la pâte en vue de produire en continu du pain de mie cuit, incluant le dispositif 14 selon la présente invention et un poste 16 de collecte du pain de mie en vue de son refroidissement, de son tranchage en blocs ou en tranches fines et de son conditionnement.

La pâte à pain de mie est une pâte fermentée à base de farine, beurre, et levure qui est laissé en pousse pendant une durée donnée.

Elle est réalisée en batch mais l'alimentation en pâte est prévue en continu au droit du poste 12 de cuisson.

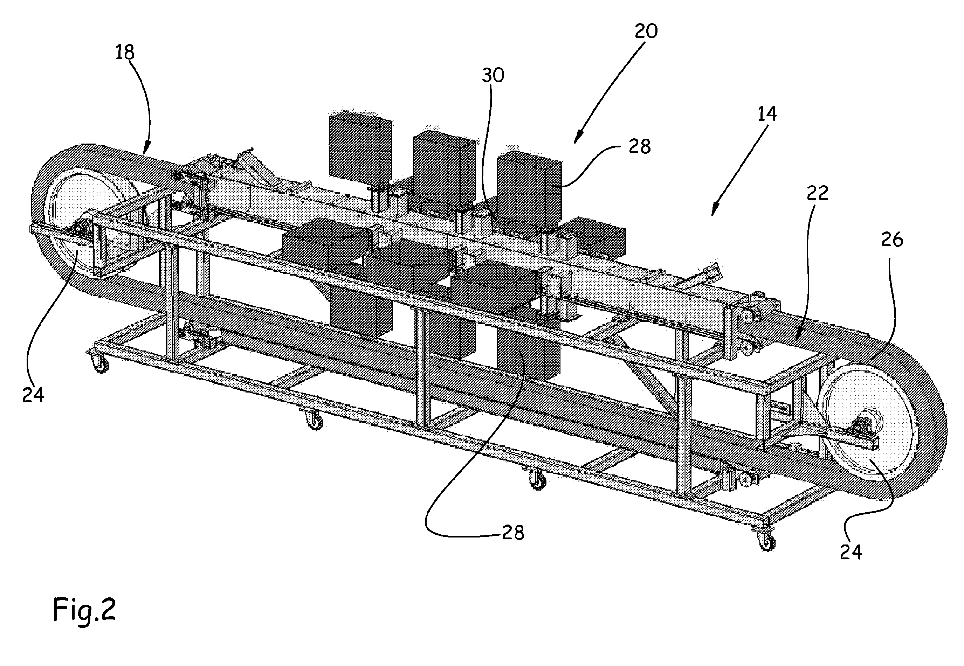

La pâte à pain de mie est versée en continu à l'entrée du poste 12 de cuisson qui comprend le dispositif 14 selon l'invention. Le dispositif 14 comporte un module 18 de transfert et un module 20 de cuisson, comme cela est visible sur la figure 2.

Le module de transfert comprend un convoyeur 22 continu, en boucle fermée, tendu entre deux poulies 24.

Au moins une des poulies 24 est motorisée de façon à assurer un déplacement dudit convoyeur.

Ce convoyeur 22 continu est constitué d'une bande 26 continue, à profil en creux, ouvert, l'ouverture étant orientée vers l'extérieur de la boucle fermée. Le profil de la bande est défini en fonction de la forme que l'opérateur souhaite donner au produit final.

En l'occurrence, la section de ce profil est choisie en U, pour conduire à la réalisation d'un pain de mie continu ayant une forme parallélépipédique, ce qui est la forme majoritairement demandée.

Cette bande 26 est composée d'un matériau apte à la déformation. On choisira par exemple un élastomère résistant à la chaleur et transparent aux micro-ondes, notamment du silicone ou un feuillard métallique mince ayant des propriétés de déformation.

La base du U assure le contact avec les poulies.

Le module de cuisson comporte des magnétrons 28 aptes à générer des micro-ondes dans les longueurs d'ondes recherchées, aptes à cuire la pâte de pain de mie contenue dans le moule comme expliqué ultérieurement.

Ces magnétrons sont munis de guides d'ondes 30 pour diffuser les micro-ondes émises avec l'orientation adaptée sur la zone visée.

Schématiquement, plusieurs magnétrons 28 avec plusieurs orientations ont été représentés sur la figure 2.

La puissance émise et tous les autres paramètres relèvent du savoir-faire du concepteur et de l'opérateur et ne font pas partie de la présente invention.

En sortie le poste 16 de collecte permet une découpe du pain de mie continu en blocs ou en tranches fines suivant les besoins, les éléments découpés étant alors mis en emballage adapté.

Le fonctionnement du dispositif est le suivant :

La pâte issue du poste 10 de fabrication est versée dans la bande 26 en continu, cette bande étant elle-même en mouvement. La dose adaptée est donc déposée en fond de bande.

La bande 26 se déplace à travers le module 20 de cuisson et la pâte subit l'action des micro-ondes, la bande étant transparente aux micro-ondes.

La pâte gonfle et cuit.

En sortie du module de cuisson, le pain de mie continu à la forme de la bande, c'est-à-dire parallélépipédique, est prêt à être démoulé en continu.

A cet effet, dès que la bande 26 subit la rotation sur la poulie 24 de sortie, la bande voit les ailes du U s'écarter et le fond du U se courber pour coller au profil de la poulie.

De ce fait, le démoulage est automatique sur les trois faces concernées.

Le pain de mie continu est, quant à lui, recueilli par le poste 16 de refroidissement et découpe. Une lame par exemple assure la reprise du pain de mie dès qu'il est libéré de la bande.

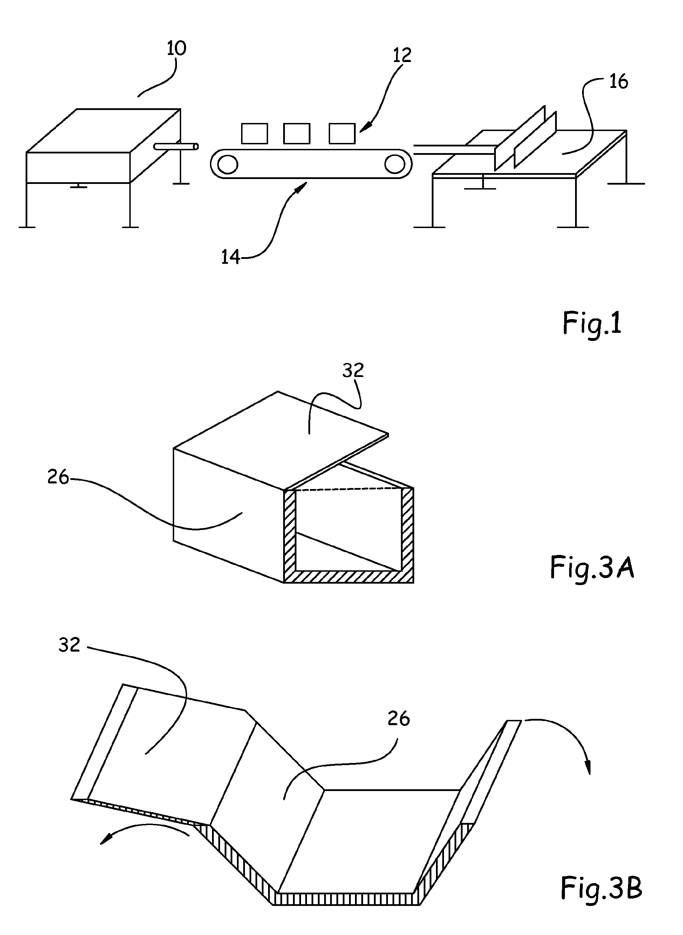

La poussée de la bande assure le déplacement du pain de mie sur la lame et au-delà jusqu'à la coupe symbolisée figure 1 par des tranchoirs.

Cet agencement à bande 26 déformable permet de contenir aisément la pression exercée par la pâte contenue. Des rouleaux de guidage peuvent être placés dans le tunnel pour renforcer la résistance mécanique et éviter tout écartement des ailes du U durant la phase de cuisson et donc d'expansion de ladite pâte.

Durant la phase retour de la bande entre les poulies 24, la bande reprend sa forme initiale en U.

Selon la présente invention, il est prévu un perfectionnement qui consiste à ménager un couvercle 32, visible en transparence sur la figure 3A et sur la figure 3B.

Ce couvercle est réalisé dans le même matériau que la bande 26, par exemple du silicone, et venu de fabrication avec ladite bande, un amincissement local permettant de réaliser une charnière.

De ce fait, le couvercle 32 se soulève lorsque le moule en U est déformé et que les ailes s'écartent. Ainsi, lors du démoulage, il ne se produit aucun blocage du pain de mie et le couvercle ne perturbe pas l'opération.

Ce couvercle ferme la bande en U durant la phase de cuisson et peut être maintenu fermé par pression de galets placés dans le poste de cuisson.

Ce couvercle 32 peut être plat ou bombé suivant les besoins.

Bien entendu, la description ci-dessus est relative à la fabrication de pain de mie mais l'application à tout produit de boulangerie ou de pâtisserie qui présenterait certaines analogies avec le pain de mie, le problème posé et la solution apportée tombe sous le coup de la présente invention, le pain de mie restant l'exemple préférentiel retenu mais sans limitation.

## Revendications

1. Dispositif de fabrication de pain de mie sans croûte, en continu, **caractérisé en ce qu'**il comprend un module (18) de transfert et un module (20) de cuisson, ledit module (18) de transfert comprenant une bande (26) continue, en boucle fermée entre deux poulies (24), cette bande étant déformable.

2. Dispositif de fabrication de pain de mie sans croûte, en continu, selon la revendication 1, **caractérisé en ce que** la bande (26) présente une section en U.

3. Dispositif de fabrication de pain de mie sans croûte, en continu, selon la revendication 1 ou 2, **caractérisé en ce que** la bande (26) est réalisée en un matériau élastomère résistant à la chaleur.

4. Dispositif de fabrication de pain de mie sans croûte, en continu, selon la revendication 1 ou 2, **caractérisé en ce que** la bande (26) est réalisée en un matériau métallique déformable.

5. Dispositif de fabrication de pain de mie sans croûte, en continu, selon l'une quelconque des revendications précédentes, **caractérisé en ce que** la bande (26) comprend un couvercle (32).

6. Dispositif de fabrication de pain de mie sans croûte, en continu, selon l'une quelconque des revendications précédentes, **caractérisé en ce que** le module (20) de cuisson comprend des générateurs (28,30) de micro-ondes.
